# EUROPEAN PATENT APPLICATION

(11) **EP 4 328 454 A1**
(43) Date of publication of application: **28.02.2024**
(21) Application number: 23191656.0
(22) Date of filing: 16.08.2023
(51) Int. Cl.: F04D 17/10, B64D 13/06, F04D 25/02, F04D 25/06

(54) **ROTOR INTEGRATED AXIAL FLUX ELECTRIC MOTOR**

(30) Priority: 22.08.2022 US 202217892719
(71) Applicant: Hamilton Sundstrand Corporation, Charlotte, NC 28217-4578 (US)
(72) Inventor: MERRITT, Brent J., Southwick, 01077 (US); KILCHYK, Viktor, Lancaster, NY, 14086 (US)
(74) Representative: Dehns

(57) **Abstract**

An air cycle machine for use in environmental control system of an aircraft includes a first wheel (24) having a rotatable portion and a second wheel (25) operably coupled to the rotatable portion of the first wheel. An axial flux electric motor (70) includes a motor rotor (74) having at least one first flux element and a motor stator (72) including at least one second flux element. The at least one first flux element is integrated into the rotatable portion (85) of the first wheel (24).

## Description

### BACKGROUND

Embodiments of the present disclosure relate to compressors, and more particularly, to an axial-flux motor integrated with a compressor.

In a compression system, a motor is provided for driving a compressor rotor. The size and type of the motor required is dependent upon several factors, including the capacity of the compressor and the operating environment of the compression system. Compressors are usually driven by electric motors that are commonly included in a housing that encases both the motor and the compressor. Such motors typically have an overhung arrangement where an unsupported end of the rotor is easily accessible within the housing. The overhung configuration not only results in asymmetric and increased loads on the motor shaft but also increases the size, complexity, and manufacturing cost of the compressor.

### BRIEF DESCRIPTION

According to an embodiment, an air cycle machine for use in environmental control system of an aircraft includes a first wheel having a rotatable portion and a second wheel operably coupled to the rotatable portion of the first wheel. An axial flux electric motor includes a motor rotor having at least one first flux element and a motor stator including at least one second flux element. The at least one first flux element is integrated into the rotatable portion of the first wheel.

In addition to one or more of the features described above, or as an alternative to any of the foregoing embodiments the first wheel includes and inlet and an outlet and a flow path extends between the inlet and the outlet, wherein the motor stator is remote from the flow path.

In addition to one or more of the features described above, or as an alternative to any of the foregoing embodiments the first wheel is a compressor.

In addition to one or more of the features described above, or as an alternative to any of the foregoing embodiments the second wheel is a turbine.

In addition to one or more of the features described above, or as an alternative to any of the foregoing embodiments the second wheel is a fan.

In addition to one or more of the features described above, or as an alternative to any of the foregoing embodiments an outlet of the first wheel is fluidly coupled to an inlet of the second wheel.

In addition to one or more of the features described above, or as an alternative to any of the foregoing embodiments the first wheel is configured to receive a first medium and the second wheel is configured to receive a second medium, the first medium being different than the second medium.

In addition to one or more of the features described above, or as an alternative to any of the foregoing embodiments the rotatable portion includes a rotor having a body including a front side and a back side, the at least one first flux element being arranged at the back side of the rotatable portion.

In addition to one or more of the features described above, or as an alternative to any of the foregoing embodiments comprising a hub mounted to the back side of the rotor, the at least one first flux element being attached to the hub.

In addition to one or more of the features described above, or as an alternative to any of the foregoing embodiments the at least one first flux element is embedded within at least one recess formed in the rotor.

In addition to one or more of the features described above, or as an alternative to any of the foregoing embodiments the rotatable portion includes a rotor having a body including a front side and a back side, the at least one first flux element being arranged at the front side of the rotatable portion.

In addition to one or more of the features described above, or as an alternative to any of the foregoing embodiments the rotatable portion further comprises a shroud and the at least one first flux element is connected to the shroud.

In addition to one or more of the features described above, or as an alternative to any of the foregoing embodiments the shroud further comprises a flange extending parallel to an axis of rotation of the rotatable portion, the at least one first flux element being supported by the flange.

In addition to one or more of the features described above, or as an alternative to any of the foregoing embodiments the first wheel further comprises a housing, the rotatable portion being arranged within the housing, wherein the motor stator is integrated into the housing.

In addition to one or more of the features described above, or as an alternative to any of the foregoing embodiments the first wheel further comprises a stationary component positioned adjacent to a side of the rotatable portion, the motor stator being integrated into the stationary component.

In addition to one or more of the features described above, or as an alternative to any of the foregoing embodiments the stationary component is a thrust plate.

In addition to one or more of the features described above, or as an alternative to any of the foregoing embodiments the at least one second flux element is radially aligned with the at least one first flux element.

In addition to one or more of the features described above, or as an alternative to any of the foregoing embodiments the at least one first flux element further comprises a plurality of first flux elements and the at least one second flux element further comprises a plurality of second flux elements, wherein the plurality of first flux elements is equal to the plurality of second flux elements.

In addition to one or more of the features described above, or as an alternative to any of the foregoing embodiments the at least one first flux element further comprises a plurality of first flux elements and the at least one second flux element further comprises a plurality of second flux elements, wherein the plurality of first flux elements is different than the plurality of second flux elements.

### BRIEF DESCRIPTION OF THE DRAWINGS

The following descriptions should not be considered limiting in any way. With reference to the accompanying drawings, like elements are numbered alike:
FIG. 1 is a schematic diagram of a portion of an environmental control system (ECS) of a vehicle;
FIG. 1A is a schematic diagram of an air cycle machine of an environmental control system according to an embodiment;
FIG. 2 is a cross-sectional view of an existing cabin air compressor of an environmental control system of an aircraft;
FIGS. 3A-3B are various views of an axial motor according to an embodiment;
FIG. 4 is a cross-sectional view of a cabin air compressor of an environmental control system of an aircraft according to an embodiment;
FIG. 5 is a cross-sectional view of a cabin air compressor of an environmental control system of an aircraft according to an embodiment; and
FIG. 6 is an end view of a compressor rotor having a motor rotor integrated therein according to an embodiment.

### DETAILED DESCRIPTION

A detailed description of one or more embodiments of the disclosed apparatus and method are presented herein by way of exemplification and not limitation with reference to the Figures.

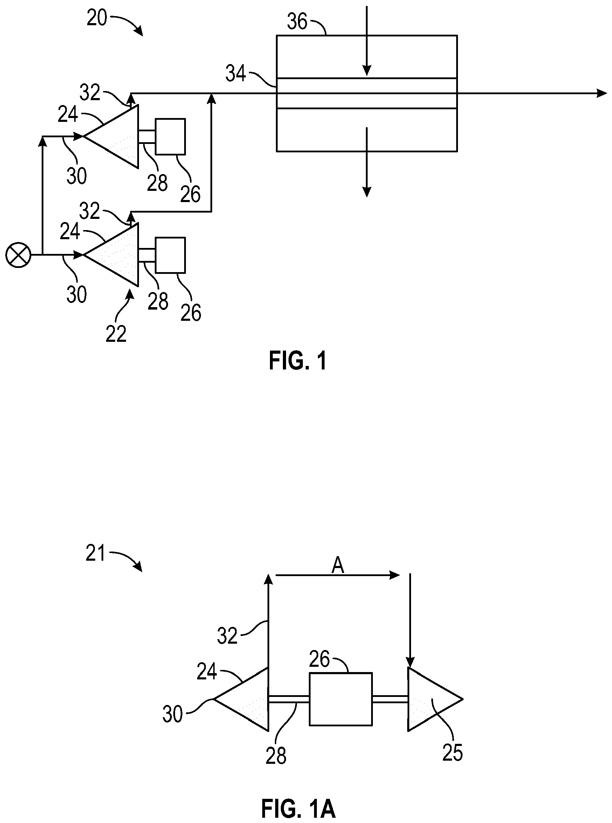

With reference now to FIG. 1, a schematic diagram of a portion of an environmental control system (ECS) 20 of a vehicle, such as an aircraft for example, is illustrated. As shown, the ECS 20 includes one or more cabin air compressors (CACs) 22. A CAC 22 includes a compressor 24 that is driven by a motor 26 operably coupled thereto. In the illustrated, non-limiting embodiment, the motor 26 is connector to the compressor 24 by a shaft 28. In an embodiment, the cabin air compressor 22 is a centrifugal compressor. However, embodiments having another type of compressor are also within the scope of the disclosure. As shown, a medium A, such as a flow of fresh or outside air for example, is provided to an inlet 30 of the compressor 24. Within the compressor 24, the airflow or flow of medium A is compressed, causing the temperature and pressure of the medium A to increase. A compressed medium A' is output from an outlet 32 of the compressor 24 to an inlet 34 of a downstream component of the ECS 20, such as to a heat exchanger 36 for example which may be part of a ram air system. The medium A' may ultimately be provided to the cabin or cockpit (not shown) of the vehicle, or alternatively, may be provided to another subsystem of the vehicle and/or exhausted overboard.

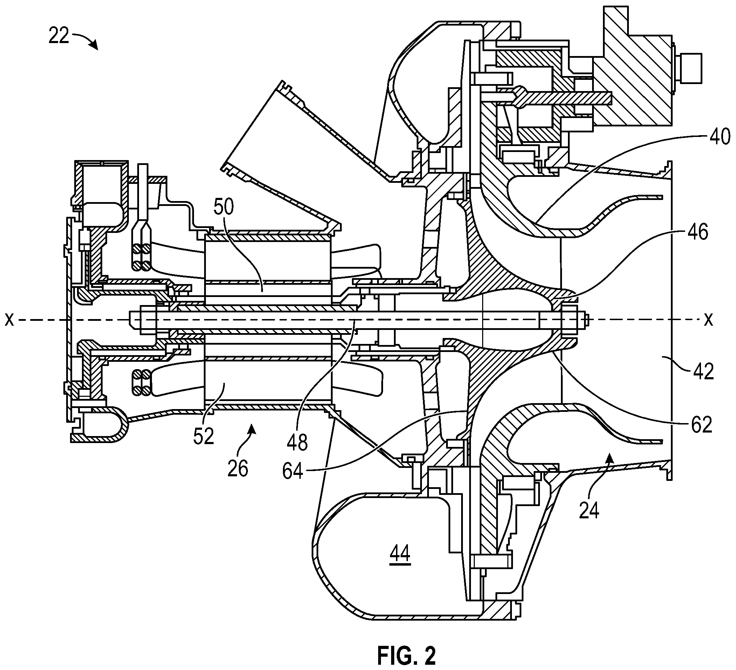

With reference now to FIG. 2, an example of an existing CAC 22 is illustrated in more detail. As shown, the compressor 24 includes a compressor housing 40 having a compressor inlet 42 and a compressor outlet 44, such as in the form of a volute for example, and defining a flow path extending between the inlet 42 and outlet 44. A compressor rotor 46 is arranged within the compressor housing 40 between the compressor inlet 42 and the compressor outlet 44. The compressor rotor 46, also referred to herein as an impeller, is generally conical in shape and is rotatable via a shaft 48 about an axis X. The body of the compressor rotor 46 includes a first side or front side 62 facing the compressor inlet 42, a second, opposite side 64, and has a plurality of impeller blades (not shown) protruding or extending from the first side 62.

In existing CACs 22, the motor 26 is an electric motor, typically a radial flux motor, and includes a motor rotor 50 mounted to a portion of the shaft 48, such as at or near an end of the shaft 48 opposite the compressor rotor 46. The motor 26 includes a motor stator 52 positioned concentrically with the motor rotor 50 and including a plurality of stator windings disposed radially outboard of the motor rotor 50. Accordingly, in such a configuration, the rotation of the motor rotor 50 resulting from operation of the motor 26 drives rotation of the shaft 48 which causes the compressor rotor 46 to rotate about the axis X.

Although the compressor 24 and the motor 26 are illustrated and described herein as part of a CAC 22, it should be appreciated that any device including an air driven compressor operably coupled to a motor is within the scope of the disclosure. In an embodiment, best shown in FIG. 1A, the compressor 24 and the motor 26 are part of an air cycle machine 21. In such embodiments, the compressor 24 may be considered a first wheel of the air cycle machine 21. Further, one or more additional wheels 25, such as a turbine and/or a fan for example, may also be mounted to the shaft 28 for rotation about axis X. When the air cycle machine 21 includes a turbine, energy extracted within the turbine may be used to drive the compressor 24 alone or in combination with the power from the motor 26. It should be understood that the medium or fluid provided to and compressed within the compressor 24 may be the same medium or fluid provided to a second wheel 25 of the air cycle machine 21. In such embodiments, as shown in FIG. 1A, the outlet 32 of the compressor 24 may be fluidly coupled to an inlet of the turbine or another wheel of the air cycle machine 21. Alternatively, a first medium or fluid may be provided to the compressor and a second medium, different from the first medium, is provided to the second wheel of the air cycle machine. In an embodiment, the second medium originates from a different source than the first medium.

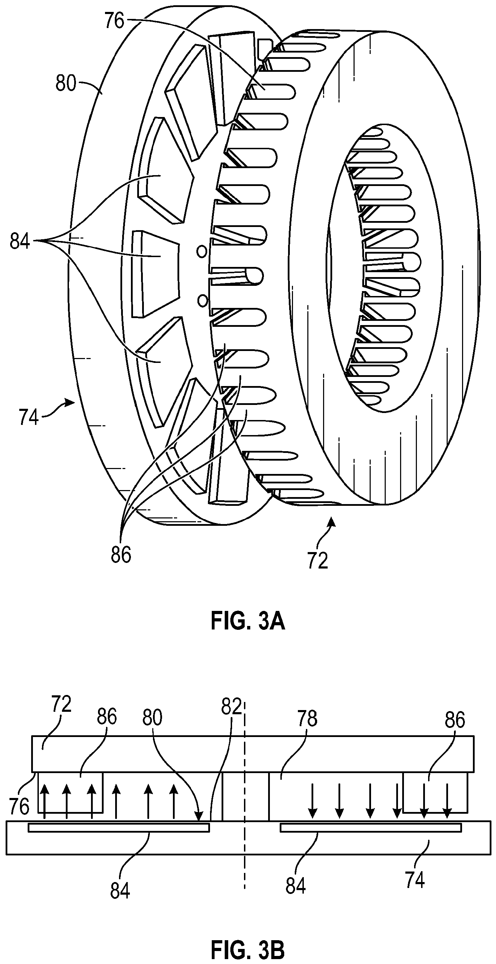

With reference now to FIGS. 3A-3B, an example of an electric axial flux motor 70 is provided. As shown, the axial flux motor 70 similarly includes a motor stator 72 and a motor rotor 74 axially spaced, and oriented generally parallel to a first side 76 of the motor stator 72. Accordingly, the gap 78 (FIG. 3B) defined between the motor stator 72 and the motor rotor 74 extends parallel to the axis of rotation. Although only a single rotor is illustrated in the FIGS., it should be appreciated that in other embodiments, the axial flux motor 70 may include two rotors, such as arranged at opposite sides of the stator 72 for example.

As shown, the active magnetic surface area 80 of the rotor 74 is formed at the planar surface or end 82 of the rotor 74 facing toward the first side 76 of the stator 72. The active magnetic surface area 80 of the rotor 74 may include one or more magnetic elements 84, such as permanent magnets and/or windings for example. The magnetic elements 84 may be spaced father away from the central axis than radial motors, resulting in increased "leverage" on the axis. By positioning the magnetic elements 84 on the face 82 of the rotor 74 rather than about the periphery thereof, the axial length of the axial flux motor 70 is much shorter than comparable radial motors.

The stator 72 similarly includes one or more elements 86 operable to generate an electric field, such as windings, electromagnets, or even permanent magnets. The elements 86 may be mounted to or generally arranged at a surface of the stator 72 facing towards the rotor 74, such as the first end 76 for example. In embodiments where the stator includes a plurality of windings, the coil hang of the windings may be eliminated.

In operation, the magnetic elements 84 on the rotor 74 are attracted to the magnetic field generated by the elements 86 of the stator 72. As can be seen in FIG. 3B, the direction of magnetic flux between the motor stator 72 and the motor rotor 74 is oriented parallel to the axis of rotation of the motor rotor 74. Axial flux motors can generate more torque for a given volume than a radial flux motor, while using fewer materials and reducing overall weight and cost. In addition, because axial flux motors typically contain a greater amount of electromagnetically active material compared to a radial counterpart, the percentage of the winding mass that causes losses is smaller than in other types of motors.

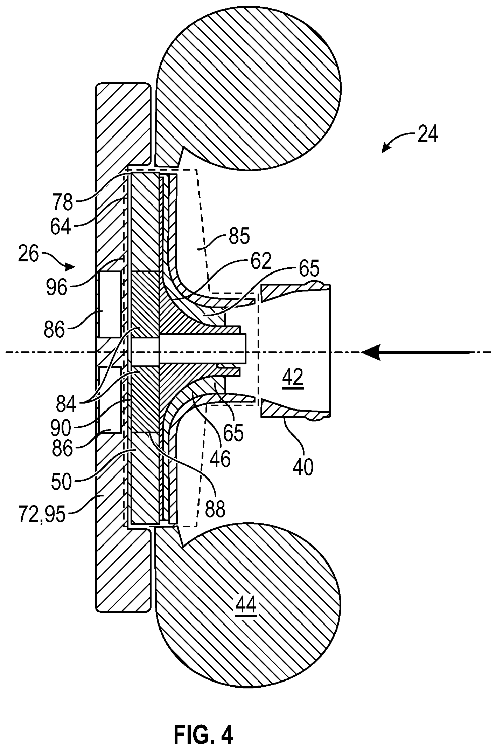

With reference now to FIG. 4, an example of a compressor 24 and a motor 26 operable to drive the compressor 24 according to an embodiment is illustrated in more detail. As shown, the electric motor 26 operable to drive the compressor rotor 46 is an axial flux motor, such as axial flux motor 70. In the illustrated, non-limiting embodiment, at least a portion of the axial flux motor 70 is integrated into the compressor 24. For example, the motor rotor 74 of the axial flux motor 70 may be integrated into the rotatable portion 85 of the compressor 24, and in an embodiment, the motor rotor 74 is integral with the compressor rotor 46.

As previously noted, the motor rotor 74 includes at least one magnetic element or first flux element 84, and in some embodiments, a plurality of first flux elements 84. In an embodiment, the at least one first flux element 84 may be mounted to a hub or plate arranged at and directly connected to the backside of the rotatable portion 85 or the compressor rotor 46. Alternatively, as shown in the FIG., the one or more first flux elements 84 may be connected directly to the compressor rotor 46 itself. For example, the one or more first flux elements 84 may be mechanically and/or chemically attached to a surface of the compressor rotor 46, or alternatively, may be embedded within a corresponding groove or recess 88 formed in the compressor rotor 46. The first flux elements 84 may be spaced circumferentially about the shaft 48 and are generally located at a position spaced radially from the shaft 48.

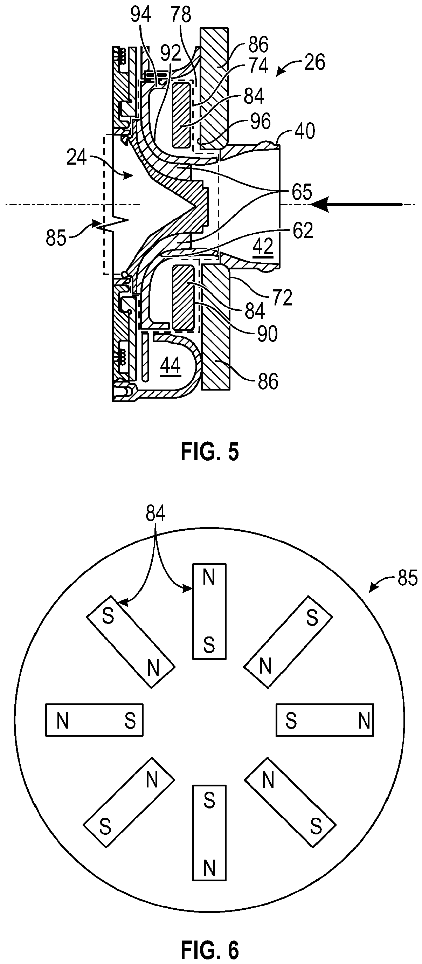

In the non-limiting embodiment shown in FIG. 4, the plurality of first flux elements 84 are embedded at the backside 64 of the compressor rotor 46. However, in other embodiments, the one or more first flux elements 84 may be arranged at another position about the rotatable portion 85 and/or the compressor rotor 46. For example, as shown in FIG. 5, in an embodiment, a plurality of first flux elements 84 are arranged at or adjacent to the front side of the rotatable portion 85 of the compressor 24. As shown, the one or more first flux elements 84 are arranged such that a surface 90 thereof is oriented substantially perpendicular to the axis of rotation X of the compressor rotor 46. To achieve such a configuration, the one or more first flux elements 84 may be partially offset from the front surface of the rotor 74. In the illustrated, non-limiting embodiment, the rotatable portion 85 of the compressor 24 includes a shroud 92 arranged concentrically with the compressor rotor 46, and the at least one first flux element 84 is mounted to the shroud 92. A flange 94 may extend from an outer periphery of the shroud 92, parallel to the axis X of the compressor rotor 46, and in an embodiment, the at least one first flux element 84 may be mounted to or supported by the circumferential flange 94. However, embodiments where the first flux elements 84 are mounted directly to or are embedded within a first side 62 of the compressor rotor 46 are also contemplated herein. In such embodiments, the first flux elements 84 are distinct from the one or more impeller blades 65 protruding from the first side of the compressor rotor 46.

As previously described, the one or more first flux elements 84 may be permanent magnets, electromagnets, or another suitable element capable of generating a magnetic flux. In embodiments including a plurality of first flux elements 84, the size and configuration of the first flux elements may be substantially identical, or may vary. Further, as shown in FIG. 6, the first flux elements 84 may be positioned such that the north and south poles of adjacent first flux elements 84 are arranged in an alternating configuration. Although the first flux elements 84 are illustrated as having a rectangular configuration, it should be appreciated that first flux elements 84 having another configuration, such as a polygonal shape or an annular configuration for example, are also within the scope of the disclosure.

With continued reference to FIGS. 4-6, the motor stator 72 similarly includes at least element, such as at least one second flux element 86, and in some embodiments, a plurality of second flux elements 86. The total number of second flux elements 86 may vary based on the total number of first flux elements 84 and the desired performance of the axial flux motor 70 and/or the compressor 24. The second flux elements 86 may be positioned in radial alignment or may radially overlap with the one or more first flux elements 84. Alternatively, the second flux elements 86 may be staggered or offset from the first flux elements 84.

The second flux elements 86 may be affixed to or embedded within a stationary portion of the compressor 24 such that the motor stator 72 is isolated from the fluid flow through the compressor 24. In an embodiment, best shown in FIG. 4, the second flux elements 86 are arranged at a stationary component positioned adjacent to the backside of the rotatable portion 85, such as a thrust plate 95 for example. However, any suitable stationary component is within the scope of the disclosure. In an embodiment, as shown in FIG. 5, the second flux elements 86 are positioned within corresponding recesses formed in the compressor housing 40. Regardless of the stationary component selected, the surface 96 of the second flux elements 86 facing the first flux elements 84 is arranged generally parallel to the surface 90 of the at least one first flux element 84. Accordingly, the axial gap 78 formed between the first flux elements 84 of the motor rotor 74 and the second flux elements 86 of the motor stator 72 may be defined by the clearance between the rotatable portion 85 and an adjacent portion of the compressor housing 40, or between the rotatable portion 85 and another stationary component of the compressor 24.

The second flux elements 86 may be permanent magnets, electromagnets, or another suitable element capable of generating a magnetic flux. In the illustrated, non-limiting embodiment, the second flux elements 86 include stator cores, such as rigid ferromagnetic blocks for example, surrounded or wrapped with stator windings formed from a conductive material. In such embodiments, the stator windings are energized with an alternating current to drive the motor rotor 74, and therefore the compressor rotor 46, about the axis X. Wiring associated with the motor stator 72 may extend through the hollow interior of the shaft or may be arranged in any suitable configuration. During operation, the motor rotor 74 is configured to rotate with respect to the motor stator 72 as the first flux elements 84 react with a magnetic field generated by the second flux elements 86, such as when the windings of the second flux elements 86 are energized. Because the first flux elements 84 are integrated into the rotating portion of the compressor 24, the rotating portion 85, including the compressor rotor 46, is configured to rotate about the axis X. It should be understood that although the axial flux motor 70 is illustrated and described herein as being integrated into a compressor, the axial flux motor 70 may be integrated into any component having a rotor or other rotating portion. Examples of other suitable components include a turbine.

Integration of a component having a rotor and an axial flux motor as described herein results in a more compact assembly having a reduced weight while allowing a single containment to be used for both the rotor and the motor. The integrated component including a rotor and an axial flux motor may be easier to produce, resulting in lower manufacturing costs and the components of the axial flux motor may be selected for optimum performance. Further, such an integration may be performed in components having a single rotating stage, or alternatively, in components having a plurality of rotating stages, such as an inline multi-stage compressor for example. Furthermore, in components having multiple stages, a separate motor may be integrated into various stages, thereby allowing the performance of the individual stages to be optimized while preserving a compact, lower weight design.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An air cycle machine for use in environmental control system of an aircraft comprising:
a first wheel (24) having a rotatable portion (85);
a second wheel (25) operably coupled to the rotatable portion of the first wheel;
and
axial flux electric motor (70) including a motor rotor (74) including at least one first flux element and a motor stator (72) including at least one second flux element, the at least one first flux element being integrated into the rotatable portion (85) of the first wheel (24).

2. The air cycle machine of claim 1, wherein the first wheel (24) includes and inlet and an outlet and a flow path extends between the inlet and the outlet, wherein the motor stator (72) is remote from the flow path.

3. The air cycle machine of claim 1 or 2, wherein the first wheel (24) is a compressor.

4. The air cycle machine of claim 3, wherein the second wheel (25) is a turbine; and/or wherein the second wheel (25) is a fan.

5. The air cycle machine of any preceding claim, wherein an outlet of the first wheel (24) is fluidly coupled to an inlet of the second wheel (25).

6. The air cycle machine of any preceding claim, wherein the first wheel (24) is configured to receive a first medium and the second wheel (25) is configured to receive a second medium, the first medium being different than the second medium.

7. The air cycle machine of any preceding claim, wherein the rotatable portion (85) includes a rotor having a body including a front side and a back side, the at least one first flux element being arranged at the back side of the rotatable portion.

8. The air cycle machine of claim 7, further comprising a hub mounted to the back side of the rotor, the at least one first flux element being attached to the hub.

9. The air cycle machine of claim 7, wherein the at least one first flux element is embedded within at least one recess formed in the rotor.

10. The air cycle machine of any preceding claim, wherein the rotatable portion (85) includes a rotor having a body including a front side and a back side, the at least one first flux element being arranged at the front side of the rotatable portion, and preferably wherein the rotatable portion further comprises a shroud and the at least one first flux element is connected to the shroud, and more preferably wherein the shroud further comprises a flange extending parallel to an axis of rotation of the rotatable portion, the at least one first flux element being supported by the flange.

11. The air cycle machine of any preceding claim, wherein the first wheel (24) further comprises a housing (40), the rotatable portion being arranged within the housing, wherein the motor stator is integrated into the housing.

12. The air cycle machine of any preceding claim, wherein the first wheel (24) further comprises a stationary component positioned adjacent to a side of the rotatable portion, the motor stator being integrated into the stationary component, and preferably wherein the stationary component is a thrust plate.

13. The air cycle machine of claim 1, wherein the at least one second flux element is radially aligned with the at least one first flux element.

14. The air cycle machine of any preceding claim, wherein the at least one first flux element further comprises a plurality of first flux elements and the at least one second flux element further comprises a plurality of second flux elements, wherein the plurality of first flux elements is equal to the plurality of second flux elements.

15. The air cycle machine of any preceding claim, wherein the at least one first flux element further comprises a plurality of first flux elements and the at least one second flux element further comprises a plurality of second flux elements, wherein the plurality of first flux elements is different than the plurality of second flux elements.
